Europäisches Patentamt

European Patent Office

Office européen des brevets

(11) Veröffentlichungsnummer: **0 416 362 A2**

# EUROPÄISCHE PATENTANMELDUNG

(21) Anmeldenummer: 90115967.3

(22) Anmeldetag: 21.08.90

(51) Int. Cl.5: **G01N 21/47**, G01N 15/02

(30) Priorität: 02.09.89 DE 3929172

(43) Veröffentlichungstag der Anmeldung:
13.03.91 Patentblatt 91/11

(84) Benannte Vertragsstaaten:
**DE GB IT**

(71) Anmelder: **BAYER AG**

**W-5090 Leverkusen 1 Bayerwerk(DE)**

(72) Erfinder: **Sommer, Klaus, Dr.**

Morgengraben 3
**W-5000 Köln 80(DE)**
Erfinder: **Thiemann, Jürgen, Dr.**
**Bodelschwinghstrasse 16**
**W-4150 Krefeld-Bockum(DE)**
Erfinder: **Botzen, Manfred**
**Parkstrasse 104**
**W-4150 Krefeld 11(DE)**
Erfinder: **Riesebeck, Detlef**
**Ringstrasse 76**
**W-4100 Duisburg 46(DE)**

(54) Vorrichtung zur Bestimmung der Grössenverteilung von Pigmentkörnern in einer Lackoberfläche.

(57) Die Vorrichtung geht aus von einem normgerechten Grindometerblock (1), der in Längsrichtung eine Probenrinne (3) mit stetig zunehmender Tiefe aufweist, die mit dem zu untersuchenden Lack gefüllt und anschließend mit einem Rakel abgezogen und geglättet wird. Anstelle einer visuellen Beurteilung des Lackaufzugs erfolgt eine objektive automatisierte Bewertung mit Hilfe einer optoelektronischen Apparatur, die folgende wesentliche Komponenten umfaßt:

a) eine Lichtquelle (5) mit einer Fokussieroptik (6) zur Erzeugung eines Lichtflecks (7) auf der zu untersuchenden Lackoberfläche,

b) eine Dunkelfeldoptik mit einem Objektiv (8, 9) zur Erfassung des Streulichts, das von Pigmentkörnern (16) im Bereich des Lichtflecks (7) ausgesandt wird und mit einer Aperturblende (10) zur Aussonderung des an der Lackoberfläche direkt reflektierten Lichts,

c) ein mit einer Auswerteschaltung (19, 20) verbundener Photoempfänger (17) zur Detektierung, Regi strierung und Weiterverarbeitung der Streulichtsignale und

d) eine Scan-Einrichtung (2a, 5, 6, 7, 22) zur Abtastung der Probenrinne (3) in Längsrichtung.

FIG.2

## VORRICHTUNG ZUR BESTIMMUNG DER GRÖSSENVERTEILUNG VON PIGMENTKÖRNERN IN EINER LACK-OBERFLÄCHE

Glanz, Farbton, Farbstärke, Deckvermögen, Transparenz und Wetterbeständigkeit von Lackschichten werden im starken Maße von der Korngröße der Pigmentkörner in der Lackoberfläche beeinflußt.

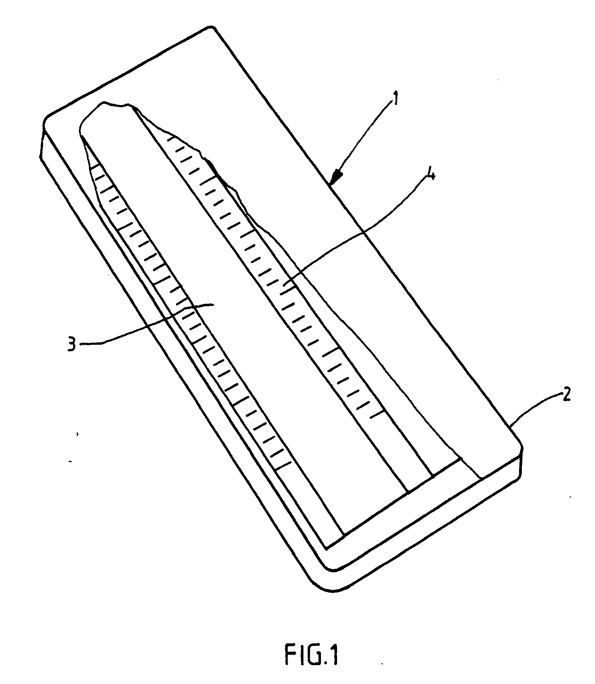

Eine der einfachsten und am häufigsten verwendeten Methode zur Beurteilung der Qualität einer Pigmentdispersion ist der Hegmann-Test (DIN ISO 1524). Dazu wird ein sogenannter Grindometerblock verwendet, der in Längsrichtung eine Probenrinne mit stetig zunehmender Tiefe aufweist, die mit dem zu untersuchenden Lack gefüllt und anschließend mit einem Rakel abgezogen und geglättet wird (z.B. Grindometer der Firma Erichson, mit einer Rinnenlänge von 140 mm, einer Rinnenbreite von 12,5 mm und einer Rinnentiefe an der tiefsten Stelle von 15, 25, 50 oder 100 $\mu$m). Beim Abziehen der Lackoberfläche mit dem Rakel gleiten die Pigmentkörner in der keilförmigen Rinne beginnend an der Stelle mit der maximalen Rinnentiefe nur bis zu dem Punkt auf dem Grindometerblock unter der Rakel hindurch, wo die Rinnentiefe mit der Korngröße übereinstimmt. In dem anschließenden Bereich, wo die Rinnentiefe kleiner ist als die Korngröße, können die Pigmentkörner nicht mehr unter der Rakelkante hindurchgleiten. Der oben erwähnte Hegmann-Test beruht nun darauf, daß man nach dem Abrakeln die Zahl und die Position der auf der Grindometeroberfläche sichtbaren Pigmentkörner visuell feststellt. An der Stelle Korngröße = Rinnentiefe werden die Pigmentkörner an der Oberfläche sichtbar. Bei größerer Rinnentiefe sinken die Teilchen zum Boden der Rinne, bei geringerer Rinnentiefe werden die Teilchen vor der Rakel hergeschoben. Die an dieser Stelle ablesbare Position kennzeichnet die Rinnentiefe an diesem Ort und damit die Partikelgröße in $\mu$m (siehe Figur 1). Die bisherige visuelle Grindometerablesung weist folgende weitere Nachteile auf:
- Verschiedene Beobachter bewerten dieselbe Probe unterschiedlich (subjektive Beurteilung).
- Die Ablesung wird von der Flüchtigkeit der Lösemittel beeinflußt; die Zeit zwischen Abstreifen und Ablesen sollte daher maximal nur 3 s betragen.
- Die Bewertung der Körnigkeit der Pigmentanreibung hängt vom Beobachtungswinkel und den Lichtverhältnissen ab.

Hier setzt die Erfindung an. Es liegt die Aufgabe zugrunde, eine Grindometerapparatur zu entwickeln, bei der die Zahl und die Position der Pigmentkörner automatisch erfaßt und durch ein geeignetes Auswertesystem interpretiert wird, so daß die Grindometerablesung vereinheitlicht und objektiviert wird. Außerdem soll das zugrundeliegende Meßverfahren vom Farbton der Pigmentdispergierung unabhängig sein.

Diese Aufgabe wird ausgehend von der üblichen Grindometermethode erfindungsgemäß durch eine Apparatur gelöst, die folgende Merkmale aufweist:

a) Eine Lichtquelle mit einer Fokussieroptik zur Erzeugung eines Lichtflecks auf der zu untersuchenden Lackoberfläche,

b) eine Dunkelfeldoptik mit einem Objektiv zur Erfassung des Streulichts, das von Pigmentkörnern im Bereich des Lichtflecks ausgesandt wird und mit einer Aperturblende zur Aussonderung des an der Lackoberfläche direkt reflektierten Lichts,

c) ein mit einer Auswerteschaltung verbundener Photoempfänger zur Detektierung, Registrierung und Weiterverarbeitung der Streulichtsignale und

d) eine Scan-Einrichtung zur Abtastung der Probenrinne in Längsrichtung.

Vorteilhaft besteht die Scan-Einrichtung aus einem Synchronmotor, der den Grindometerblock mit Hilfe einer Schlittenführung zeitlinear in Längsrichtung verschiebt, wobei der Lichtfleck über die zu untersuchende Lackoberfläche wandert.

Gemäß einer bevorzugten Ausführung werden ferner die Streulichtsignale während des Scan-Vorganges von der Auswerteschaltung in Längsrichtung der Lackoberfläche zonenweise gezählt. Zu diesem Zweck wird vorteilhaft bei der Erfassung des Steulichts ein sich senkrecht zur Probenrinne erstreckender schmaler Spalt ausgeblendet.

Mit der Erfindung werden folgende Vorteile erzielt:
- Nach dem Auftragen und Abrakeln der Lackoberfläche auf dem Grindometerblock erfolgt eine objektive, vollautomatische Messung.
- Die meßtechnische Erfassung der Körnigkeit stimmt sehr gut mit der bisher durchgeführten visuellen Bewertung überein.
- Die Apparatur besitzt eine für alle Zwecke ausreichende Reproduzierbarkeit.
- Die meßtechnische Erfassung der Körnigkeit ist bei allen gängigen Farbtönen möglich.

Mit dem neu geschaffenen optoelektronischen Grindometer kann zum ersten Mal eine benutzerunabhängige, detailgetreue und in allen Anwenderlabors einheitliche Bewertung der Körnigkeit von Pigmentdispersionen erfolgen.

Im folgenden wird die Erfindung anhand eines in der Zeichnung dargestellten Ausführungsbeispieles näher erläutert. Es zeigen:

Fig. 1 einen handelsüblichen Grindometerblock,

Fig. 2 den prinzipiellen optischen Aufbau der Apparatur,

Fig. 3 die Dunkelfeldoptik zur Erfassung des an den Pigmentkörnern gestreuten Lichtes,

Fig. 4 das Prinzip der elektronischen Meßdatenerfassung und -auswertung,

Fig. 5 ein Meßbeispiel für die Untersuchung der Stippenzahl an einem Weißpigment und

Fig. 6 die dem Meßbeispiel gemäß Fig. 5 entsprechende Stippenzahl pro Längenintervall als Funktion der Teilchengröße.

Der Grindometerblock gemäß Fig. 1 besteht aus einer rechteckigen Metallplatte 2, in die in Längsrichtung eine Rinne 3 mit keilförmigem Profil eingefräst ist. Die auf der Skala 4 angegebene Rinnentiefe nimmt hier von hinten nach vorne linear ab. Die Rinnenbreite beträgt z.B. 12,5 mm; die Rinnentiefe überdeckt z.B. den Bereich von 0 bis 50 $\mu$m. Die zu untersuchende Pigmentprobe wird in die Probenrinne 3 gefüllt und mit einem Rakel abgezogen. Alternativ kann auch eine Halterung vorgesehen werden, welche die Rakel mit konstanter Kraft auf den Grindometerblock 1 drückt und welche sich zum Beginn der Messung am äußeren hinteren Ende des Grindometerblocks befindet.

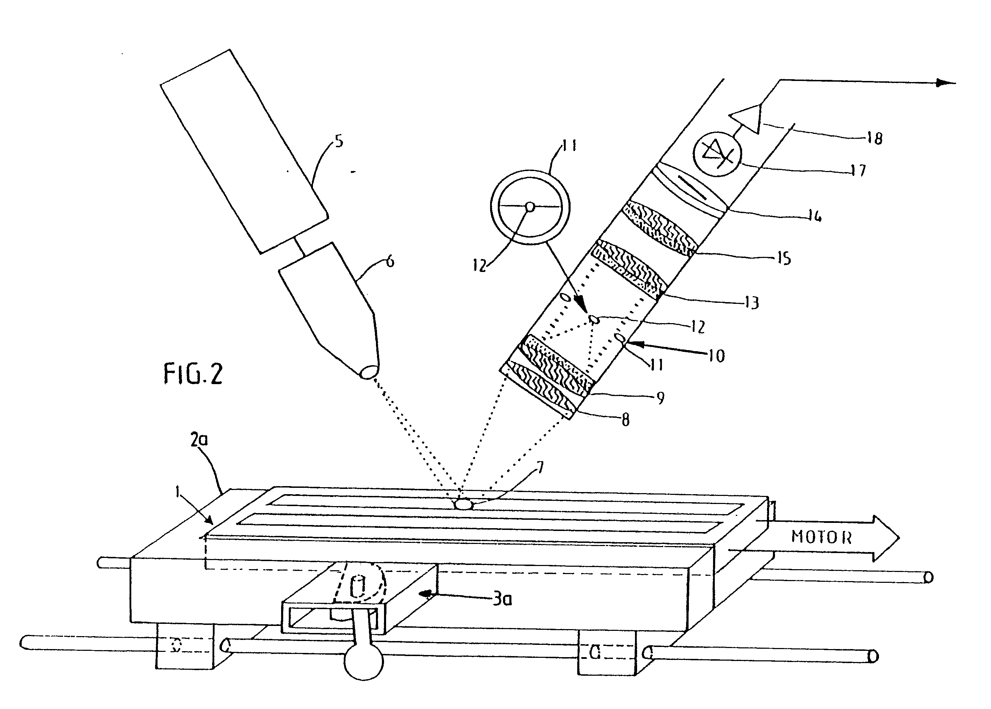

Ein derart vorbereiteter Grindometerblock 1 wird auf einem motorgetriebenen Schlitten 2a angeordnet und mit Hilfe einer Klemmvorrichtung 3a befestigt (siehe Fig. 2). Anhand von Fig. 2 wird der optische Aufbau der Apparatur beschrieben. Dabei ist die optische Konfiguration dem speziellen Meßproblem, einzelne Fehlstellen in einer hochglänzenden Oberfläche zu detektieren, angepaßt. Der von einem Helium-Neon-Laser kommende Lichtstrahl 5 wird durch ein Mikroskopobjektiv 6 so in einen divergenten Strahl umgewandelt, daß der auf die Probenrinne 3 des Grindometerblocks 1 fallende Lichtfleck 7 die gesamte Rinnenbreite ausleuchtet. Die Achromate 8 und 9 fokussieren das vom dem Lackaufzug direkt reflektierte Licht auf eine Aperturblende 10, die aus einer Kreisringfläche 11 zur Begrenzung der Apertur und einer zentralen Kreisfläche 12 besteht. Das durch hervorstehende Pigmentteilchen in der Lackoberfläche hervorgerufene Streulicht kann die Aperturblende 10 passieren und wird durch die Linse 13 auf einen 200 $\mu$m breiten Spalt 14 abgebildet, während das an der ungestörten Lackoberfläche direkt reflektierte Licht auf den zentralen Teil 12 der Aperturblende 10 trifft und dadurch ausgeblendet wird. Ein schmalbandiges Interferenzfilter 15 mit einer Schwerpunktswellenlänge von 633 nm dient zur Unterdrückung von Falschlicht anderer Wellenlängen.

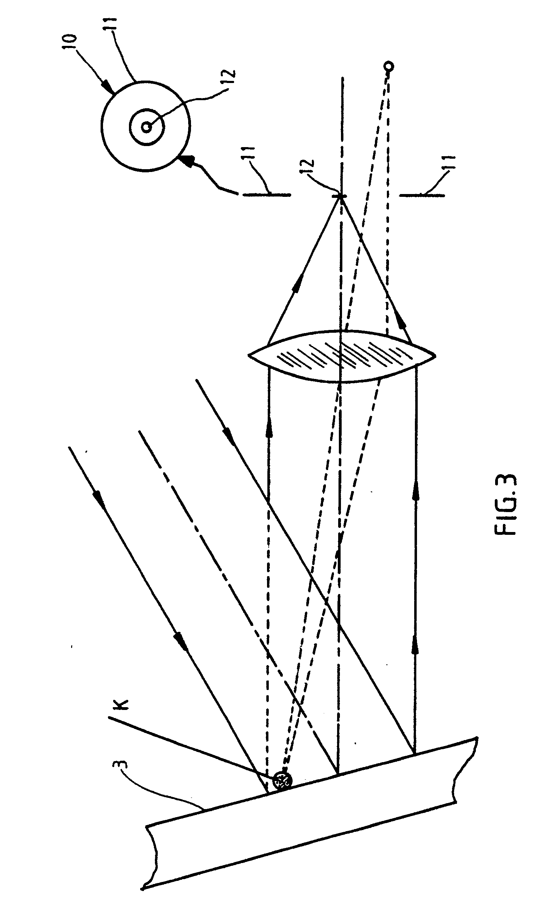

Die Wirkung der Aperturblende 10 beruht darauf, daß die hoch- und niederfrequenten Anteile der Fouriertransformierten der Lackoberfläche ausgefiltert werden (räumliche Filterung). Dies wird anhand von Fig. 3 noch einmal verdeutlicht. Aufgrund der Tatsache, daß das an der Lackoberfläche direkt reflektierte Licht durch das Achromatensystem 8, 9 auf den zentralen Teil 12 der Aperturblende 10 fokussiert wird (durchgezogene Strahlen), während das an einem Pigmentkorn 16 gestreute Licht durch die Öffnung zwischen dem Kreisring 11 und dem zentralen Teil 12 der Blende hindurchfällt, erhält man eine kontrastreiche Dunkelfeldbeleuchtung, wobei die Pigmentteilchen 16 als helle Punkte auf einem dunklen Untergrund erscheinen.

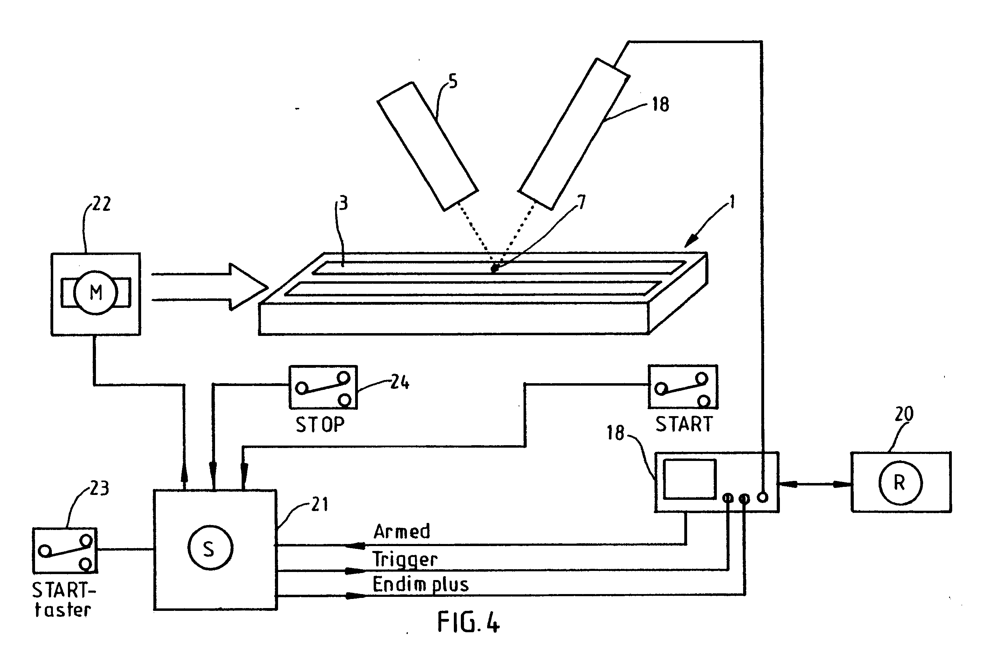

Das durch die Spaltblende 14 fallende Meßlicht trifft auf einen Siliziumphotodetektor 17 mit einer Fläche von 25,5 x 0,4 mm². Das erzeugte elektrische Signal wird von einem driftarmen Operationsverstärker 18 verstärkt und anschließend einem Digitalspeicheroszilloskop 19 zugeführt. Die Auswertung des Meßsignals wird nachfolgend anhand von Fig. 4 erläutert.

Der elektronische Aufbau des optoelektronischen Grindometers besteht im wesentlichen aus dem Digitalspeicheroszilloskop 19 mit angeschlossenem Rechner 20 und der zentralen Steuereinheit 21, die auch den Synchronmotor 22 für die laterale Bewegung des Grindometerblocks 1 steuert.

Zu Beginn einer Messung aktiviert der Rechner 20 das Oszilloskop 19, das durch diesen Befehl ein "ARMED"-Signal an die Steuereinheit 21 weitergibt. Erst jetzt ist das Grindometer startbereit.

Durch Betätigen der Starttaste 23 wird der Motorantrieb 22 in Gang gesetzt, der einen waagerechten Vorschub (in Pfeilrichtung) des Grindometerblocks 1 bewirkt. Dabei scannt der Lichtfleck 7 die Lackoberfläche in der Probenrinne 3 ab (Scan-Einrichtung (2a, 5, 6, 7, 22)). Die Vorschubgeschwindigkeit beträgt ca. 2 cm/s. Erreicht der Grindometerblock 1 die Startmarkierung, so aktiviert ein Startmikroschalter 24 die Steuereinheit 21, die mit einem Startimpuls das Oszilloskop 19 triggert. Der Grindometerblock 1 mit dem zu untersuchenden Lackaufzug in der Probenrinne 3 fährt nun unter dem Lichtfleck 7 her, wobei das Meßsignal vom Oszilloskop 19 aufgezeichnet wird.

Gelangt der Grindometerblock 1 schließlich bis zur Endposition, so wird durch einen Stop-Mikroschalter die Steuereinheit 21 angesprochen, die sofort den Motorantrieb 22 stoppt, den Laserstrahl unterbricht und einen Endimpuls an das Oszilloskop 19 sendet.

Anschließend erfolgt der Datentransfer vom Oszilloskop 19 zum Rechner 20. Die Daten enthalten das aufgezeichnete Meßsignal, sowie den Endimpuls, der zur Ortsauflösung der Daten erforderlich ist.

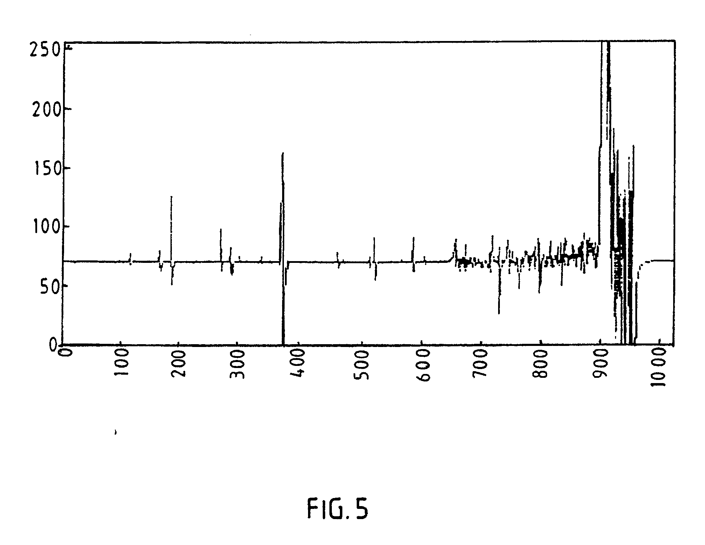

Fig. 5 zeigt einen typischen Datensatz, wie er nach dem Abscannen einer Weißpigmentprobe in der Probenrinne 3 des Grindometerblocks 1 auf dem Bildschirm des Oszilloskops 19 anfällt. In dieser Kurve sind die positiven Peaks durch Stippen in der Oberfläche des Lackaufzugs verursacht. Die nach unten gerichteten Peaks bleiben unberücksichtigt; d.h. die Mittellinie wird als Basislinie zugrundegelegt.

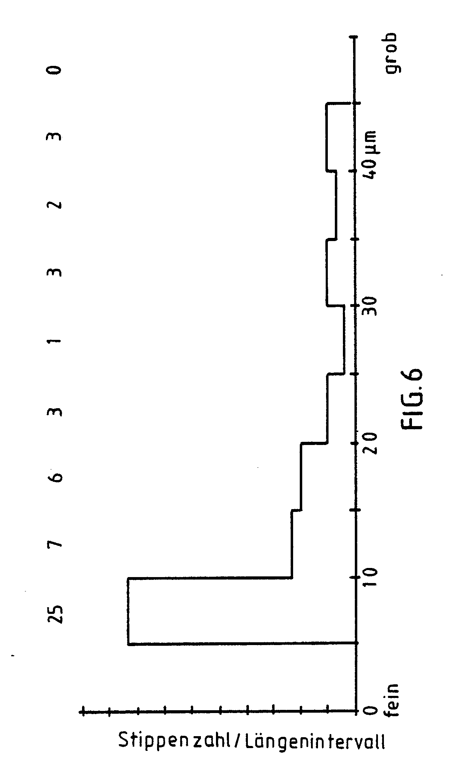

Fig. 6 zeigt die Daten nach der rechnerischen Auswertung in einer histogrammartigen Darstellung.

Als Endergebnis erhält man die Zahl der in einem Längenintervall von 5 µm (Kanalbreite) als Funktion der Teilchengröße (Abszisse) gefundenen Stippen.

## Ansprüche

1. Vorrichtung zur Bestimmung der Mahlfeinheit (Körnigkeit, Kornfeinheit) von pigmentierten Lakken, Anstrichstoffen und ähnlichen Erzeugnissen mit einem Grindometerblock (1), der in Längsrichtung eine Probenrinne (3) mit stetig zunehmender Tiefe aufweist, die mit dem zu untersuchenden Lack gefüllt und anschließend mit einem Rakel abgezogen und geglättet wird, gekennzeichnet durch

a) eine Lichtquelle (5) mit einer Fokussieroptik (6) zur Erzeugung eines Lichtflecks (7) auf der zu untersuchenden Lackoberfläche,

b) eine Dunkelfeldoptik mit einem Objektiv (8, 9) zur Erfassung des Streulichts, das von Pigmentkörnern (16) im Bereich des Lichtflecks (7) ausgesandt wird und mit einer Aperturblende (10) zur Aussonderung des an der Lackoberfläche direkt reflektierten Lichts,

c) ein mit einer Auswerteschaltung (19, 20) verbundener Photoempfänger (17) zur Detektierung, Registrierung und Weiterverarbeitung der Streulichtsignale und

d) eine Scan-Einrichtung (2a, 5, 6, 7, 22) zur Abtastung der Probenrinne (3) in Längsrichtung.

2. Vorrichtung nach Anspruch 1, dadurch gekennzeichnet, daß die Scan-Einrichtung einen Synchronmotor (22) umfaßt, der den Grindometerblock (1) zeitlinear in Längsrichtung verschiebt, wobei der Lichtfleck (7) über die zu untersuchende Lackoberfläche wandert

3. Vorrichtung nach Anspruch 1 bis 2, dadurch gekennzeichnet, daß die Streulichtsignale während des Scan-Vorganges von der Auswerteschaltung (19, 20) in Längsrichtung der Lackoberfläche zonenweise gezählt werden.

4. Vorrichtung nach Anspruch 1 bis 3, dadurch gekennzeichnet, daß bei der Erfassung des Streulichts ein sich senkrecht zur Probenrinne (3) erstreckender schmaler Spalt (14) ausgeblendet ist.

FIG.1

FIG.2

FIG.3

FIG. 4

EP 0 416 362 A2

FIG. 5

25     7     6     3     1     3     2     3     0

Stippenzahl / Längenintervall

0      10      20      30      40 µm

fein             grob

FIG.6